# EUROPEAN PATENT APPLICATION

(11) **EP 3 757 156 A1**
(43) Date of publication of application: **30.12.2020**
(21) Application number: 19756951.0
(22) Date of filing: 22.02.2019
(51) Int. Cl.: C08J 9/26, H01G 9/02, H01G 11/52, H01M 2/16

(54) **POROUS POLYOLEFIN FILM**

(30) Priority: 23.02.2018 JP 2018030549; 23.02.2018 JP 2018030550
(71) Applicant: Toray Industries, Inc., Tokyo, 103-8666 (JP)
(72) Inventor: TOYOTA, Naoki, Nasushiobara-shi, Tochigi 329-2763 (JP); SHIMOKAWATOKO, Haruka, Nasushiobara-shi, Tochigi 329-2763 (JP); ISHIHARA, Takeshi, Nasushiobara-shi, Tochigi 329-2763 (JP); KUMA, Takuya, Nasushiobara-shi, Tochigi 329-2763 (JP)
(74) Representative: Mewburn Ellis LLP
(86) International application number: PCT/JP2019/006736
(87) International publication number: WO 2019/163935

(57) **Abstract**

Provided is a porous polyolefin film having a shutdown temperature of 133°C or lower, a porosity of 41% or more, and a value of 12,500 or more, which is calculated by (tensile elongation (%) in the machine direction (MD) × tensile strength (MPa) in the machine direction (MD) + tensile elongation (%) in the transverse direction (TD) × tensile strength (MPa) in the transverse direction (TD))/2, the TSD (°C) and Tm satisfying the following formula (1): $Tm - TSD \geq 0$ Formula (1), where TSD represents the shutdown temperature (°C), and Tm represents the lowest among the melting point (°C) of all layers, wherein excellent safety, such as protection from internal short circuit and/or thermal runaway, is achieved in the porous polyolefin film, without reducing the permeability as shown in conventional microporous films.

## Description

### Technical Field

The present invention relates to a microporous film that is widely used, for example, as a separation membrane for use in, for example, separation or selective permeation of substances, or as an insulating material for electrochemical devices, such as alkaline, lithium secondary or fuel batteries and capacitors, and particularly relates to provision of a microporous polyolefin film that is suitably used as a separator for lithium ion batteries and exhibits excellent safety under internal short circuit conditions in batteries or during nailing test, without reducing the permeability, as compared to conventional microporous films.

### Background Art

Microporous polyolefin films are used as filters, separators for fuel batteries, separators for capacitors, or the like, and are suitably used as separators for lithium ion batteries that are widely used particularly in notebook personal computers, cell phones, digital cameras, and the like. The excellent mechanical film strength and shutdown property are given as reasons for the wide use of microporous polyolefin films. In particular, safety requirements for separators has become more stringent, as lithium ion secondary batteries, mainly those for vehicle use, have been are under development in recent years, aiming to increase the size, energy density, capacity, and power of the batteries.

The shutdown property refers to the ability to melt for pore blockage, which prevents the electrochemical reaction in batteries and thereby ensures the safety of the batteries, when the batteries are overcharged and overheated inside, and a lower shutdown temperature is considered as indicating a higher safety effect.

Additionally, a component (separator) has become thinner and thinner with increasing battery capacity, which requires the separator to increase the anti-piercing strength and the tensile strength and elongation in the MD (machine direction) and the TD (transverse direction), to prevent short-circuit formation during the winding process or due to the presence of foreign matter in batteries. However, the shutdown temperature and the strength are in a trade-off relation.

As a method to increase the strength, a method in which the draw ratio is increased to control the orientation or a high-molecular-weight PO (polyolefin) polymer is used is employed, while as a method for achieving low-temperature shutdown the melting point of each raw material is reduced by using raw materials with low molecular weights.

That is, the increase of draw ratio or the use of a high-molecular-weight PO polymer promotes increase in the strength of films, but also increases the melting points, which results in increase in shutdown temperature. In contrast, use of raw materials with low molecular weights leads to reduction in melting point, which results in decrease in shutdown temperature but causes low strength. Thus, it is difficult to keep a good balance between shutdown property and strength by means of these two methods.

Patent Document 1 describes a technique to produce a microporous film by sequential stretching of a PE (polyethylene) polymer with a relatively high molecular weight, as a technique to yield a microporous film which is highly safe as well as is highly permeable and mechanically strong. The resulting microporous film is highly permeable and strong, and is further characterized by a high rupture temperature at which the film as a separator ruptures when exposed to the high temperature, and by a good thermal shrinkage property. However, the sequential stretching step in the production process causes the polymer to be highly oriented, which results in increase in shutdown temperature.

Patent Document 2 describes a technique to achieve both excellent shutdown property and high strength capacity by use of a low-molecular-weight PE polymer with a viscosity-average molecular weight of 100,000 to 300,000 and a relatively high-molecular-weight PE polymer with a viscosity-average molecular weight of not less than 700,000. However, the component with a relatively high molecular weight used as a main raw material to keep the strength causes a shutdown temperature as high as 137°C, which results in insufficient shutdown performance. Typically, the use of a low-molecular-weight PE polymer leads to reduction in melting point, which in turn leads to pore blockage and reduction in porosity by heat treatment during the production of separators. In Patent Document 2, the addition of inorganic particles reduces a high rate of pore blockage and helps maintain a high level of porosity, but the use of inorganic particles for pore formation leads to the disadvantage of heterogeneous film structure.

Patent Document 3 describes a technique in which a copolymer resin of ethylene and isobutylene is used for the purpose of achieving both oxidation resistance and safety. Although the copolymer of ethylene and isobutylene has a relatively high molecular weight, as indicated by a molecular weight of 500,000, the use of the copolymer allows reduction in melting point, as well as maintains the high strength capacity, excellent pore-blocking ability, and low thermal shrinkage ratio. However, the porosity still remains to be improved.

Patent Documents 4 and 5 describe techniques in which a multilayer film is used for the purpose of separating a shutdown function from a strength-related function. Although an excellent level of safety performance, as indicated by a shutdown temperature of around 130°C, is achieved, sufficient strength is not provided by use of a PE polymer with a low molecular weight and a low melting point.

As described above, the use of raw materials with high molecular weights or the control of orientation is required to increase the strength capacity. However, the melting point is increased in either case, and the shutdown property remains at low level. In addition, use of a raw material with a low melting point allows excellent shutdown performance but causes a reduction in porosity due to pore blockage during heat treatment. There remains room for improvement in the development of highly safe separators with excellent strength (toughness) which meet a wide variety of customers' needs in relation to a higher energy density, higher capacity, and higher power, without reducing the battery performance.

### Citation List

### Patent Literature

Patent Document 1: JP 2009-108323 A
Patent Document 2: JP 2008-266457 A
Patent Document 3: JP 2009-138159 A
Patent Document 4: JP 2015-208893 A
Patent Document 5: JP H11-322989 A

### Summary of Invention

### Technical Problem

In view of the above reasons, an object of the present invention is to provide a porous polyolefin film which exhibits excellent safety, as indicated by one of the safety indexes such as nailing resistance or foreign matter resistance, without reducing the battery performance as shown in conventional microporous films.

### Solution to Problem

The inventors studied hard to solve the above problems and consequently found that the shutdown temperature (TSD) and the strength (toughness) are effective against destructive tests on batteries, such as nailing test, and for improvement of safety and permeability to higher levels, which have not been achieved by conventional technologies. That is, the present invention has the following constitution:

A porous polyolefin film having at least one layer, the porous polyolefin film having a shutdown temperature (TSD) of 133°C or lower, a porosity of 41% or more, and a value of 12,500 or more, which is calculated by (tensile elongation (%) in the machine direction (MD) × tensile strength (MPa) in the machine direction (MD) + tensile elongation (%) in the transverse direction (TD) × tensile strength (MPa) in the transverse direction (TD))/2, the TSD (°C) and Tm satisfying the following formula (1): $Tm - TSD \geq 0$ Formula (1), where Tm represents the lowest among the melting point(s) (°C) of all the layer(s).

A separator for batteries in which the porous polyolefin film is used.

A secondary battery in which the separator for batteries is used.

A method of producing the porous polyolefin film, the method comprising the steps of: preparing a solution that is composed of 10 to 40% by mass of raw materials, including polyolefin as a main component, and 60 to 90% by mass of a solvent; extruding the solution from a die to produce an unstretched gel composition under cooling for solidification; stretching the gel composition at a temperature from the crystalline dispersion temperature of the polyolefin to the melting point + 10°C; removing a plasticizer from the resulting stretched film and drying the film; and then subjecting the resulting stretched material to heat treatment/re-drawing, wherein the polyolefin contains a high-density polyethylene polymer containing α-olefin, and wherein the high-density polyethylene polymer containing α-olefin has a melting point of 130 to 135°C and a molecular weight of not more than 350,000.

### Advantageous Effects of Invention

The present invention can provide a microporous film that exhibits excellent nailing resistance or foreign matter resistance as well as maintains the battery performance when used as a separator for batteries, because the microporous film of the present invention has an improved shutdown property as compared to that of conventional microporous polyolefin films, while maintaining the strength and the porosity.

### Brief Description of Drawing

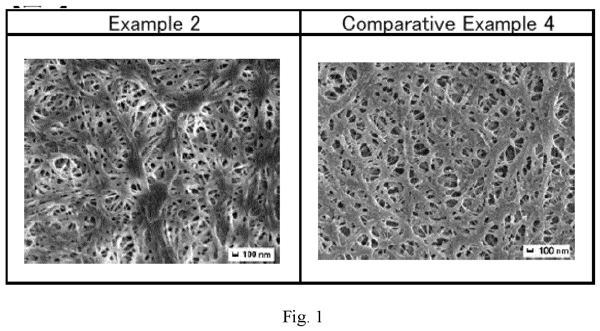

FIG. 1 shows SEM images of porous polyolefin films of Example 2 and Comparative Example 4.

### Description of Embodiments

The porous polyolefin film of the present invention is a porous polyolefin film having at least one layer, wherein the porous polyolefin film has a shutdown temperature (TSD) of 133°C or lower, a porosity of 41% or more, and a value of 12,500 or more, which is calculated by (tensile elongation (%) in the machine direction (MD) × tensile strength (MPa) in the machine direction (MD) + tensile elongation (%) in the transverse direction (TD) × tensile strength (MPa) in the transverse direction (TD))/2, and the TSD and Tm satisfy the following formula (1): $Tm - TSD \geq 0$ Formula (1), where TSD represents the shutdown temperature (°C), and Tm represents the lowest among the melting point(s) (°C) of all the layer(s).

The porous polyolefin film of the present invention does not need to be composed of a single raw material but may be a composition that is composed of a combination of a main raw material and an auxiliary raw material(s). The raw material is preferably a polyolefin resin and may be a polyolefin composition. In addition, a raw material used for the purpose of reducing the shutdown temperature may be used as a main raw material or as an auxiliary raw material. Examples of polyolefin include polyethylene and polypropylene, among which two or more polyolefin polymers can be blended and then used. A polyolefin resin used as the main raw material preferably has a weight-average molecular weight (hereinafter referred to as Mw) of not less than 1.5 × 10⁵, more preferably not less than 1.8 × 10⁵. The upper limit is preferably a Mw of not more than 5.0 × 10⁵, more preferably a Mw of not more than 3.5 × 10⁵, further preferably not more than 3.0 × 10⁵. When the polyolefin resin has a Mw of not less than 1.5 × 10⁵, it can disturb the stretching-induced orientation (increase in melting point) or reduce a high rate of pore blockage during a heat treatment in the film production process due to the use of the raw material with a low melting point, which in turn prevents a rise in shutdown temperature or a reduction in porosity. When the polyolefin resin has a Mw of not more than 5.0 × 10⁵, it can prevent a rise in shutdown temperature due to the increased melting point of the raw material. In addition, although the reason is unclear, addition of an ultra-high-molecular-weight polyolefin polymer with a Mw of not less than 1.0 × 10⁶ can prevent a rise in shutdown temperature. Thus, where two or more types of polyolefin polymers are combined for the purpose of improving the physical properties of porous films, such as increasing the strength capacity, an ultra-high-molecular-weight polyolefin polymer with a Mw of not less than 1.0 × 10⁶ is preferably combined with a polyolefin polymer(s) with a Mw of 1.0 × 10⁵ to 5.0 × 10⁵.

From the viewpoint of reducing the heat generated by short-circuit current, the shutdown temperature is importantly 133°C or lower, preferably 131°C or lower, further preferably 130°C or lower, most preferably 128°C or lower. In cases where the shutdown temperature is 133°C or lower, a high level of safety is achieved when the porous polyolefin film of the present invention is used as a separator for secondary batteries that need a higher energy density, higher capacity, and higher power, such as those for electric vehicles. In cases where the shutdown temperature is 100°C or lower, pores are blocked and the battery performance is deteriorated even in the normal operating environment. Thus, the lower limit of shutdown temperature is around 100°C. To keep the shutdown temperature within the above range, it is desired that the raw material composition of the film and, moreover, the stretching and heat-setting conditions during the film production fall within the following ranges. When the shutdown temperature is 133°C or lower, excellent nailing resistance and improved safety are achieved as compared to those of conventional separators.

The porous polyolefin film of the present invention has a porosity of not less than 41%, preferably not less than 42%, more preferably not less than 45%, in view of permeability and electrolyte solution content. In cases where the porosity is less than 41%, the porous polyolefin film exhibits low ion permeability when used as a separator for batteries, which may reduce the output performance of the batteries. Although a higher porosity is more desirable in terms of output performance, the upper limit of porosity is around 70%; for excessively high porosity may cause a reduction in strength. To keep the porosity within the above range, it is desired that the raw material composition of the film fall within the aforementioned range and the stretching and heat-setting conditions during the film production fall within the following ranges. In particular, the microporous film of the present invention is superior in having improved porosity, shutdown temperature, and strength (toughness), which have been conventionally in a trade-off relation.

The main raw material or the raw material used for the purpose of reducing the shutdown temperature preferably has a melting point of 130°C or higher and 135°C or lower, more preferably 133°C or lower, from the viewpoint of controlling the porosity, shutdown temperature (TSD), and melting point of the film. A melting point of 130°C or higher can prevent a reduction in porosity, while a melting point of 135°C or lower can prevent a rise in shutdown temperature.

The polyolefin resin preferably contains polyethylene as a main component. For improvement of the permeability, the porosity, the mechanical strength, and the shutdown property, polyethylene is preferably used at a ratio of not less than 70% by mass, more preferably at a ratio of not less than 80% by mass, and further preferably used alone in the polyolefin resin, where the ratio of the polyolefin resin as a whole is considered as 100%. In addition, not only an ethylene homopolymer, but also copolymers containing other α-olefin units, by which the melting point of the raw material is reduced, are preferred as the polyethylene. The α-olefin includes, for example, propylene, butene-1, hexene-1, pentene-1, 4-methylpentene-1, octene, or other molecular chains, vinyl acetate, methyl methacrylate, and styrene. Hexene-1 is most preferred as the copolymer containing α-olefin. Moreover, α-olefin units can be identified by ¹³C-NMR measurement.

In this respect, the type of polyethylene polymer includes, for example, high-density polyethylene with a density of more than 0.94 g/cm³, medium-density polyethylene with a density of 0.93 to 0.94 g/cm³, low-density polyethylene with a density of less than 0.93 g/cm³, and straight-chain low-density polyethylene, and high-density polyethylene and medium-density polyethylene are preferably used to increase the film strength and may be used individually or in combination.

Addition of a low-density polyethylene polymer, a straight-chain low-density polyethylene polymer, an ethylene/α-olefin copolymer produced with a single-site catalyst, or a low-molecular-weight polyethylene polymer with a weight-average molecular weight of 1,000 to 100,000 provides low-temperature thermal shutdown function and allows the porous polyolefin film as a separator for batteries to improve the performance. However, an increased ratio of the above-described low-molecular-weight polyethylene reduces the porosity of the resulting microporous film during the film production process. Therefore, a high-density polyethylene polymer, such as an ethylene/α-olefin copolymer with a density of more than 0.94 g/cm³, is preferred, and a long-chain branched polyethylene is further preferred.

Additionally, when the molecular weight distribution of the microporous polyolefin film of the present invention is determined, polymer components with a molecular weight of less than 40,000 are preferably contained at a ratio of less than 20% from the above viewpoints. More preferably, polymer components with a molecular weight of less than 20,000, further preferably molecular weight of less than 10,000, are contained at a ratio of less than 20%. In the present invention, the above-described raw material can be used to reduce the shutdown temperature without greatly reducing the molecular weight, which can be consistent with other physical properties, such as strength and porosity.

The molecular-weight distribution (MwD) of the polyethylene polymer is preferably more than 6, more preferably not less than 10. A polyethylene polymer with a molecular-weight distribution of more than 6 is used to improve the balance between shutdown temperature and toughness.

Moreover, addition of polypropylene can improve the melt-down temperature of the porous polyolefin film of the present invention when the porous polyolefin film is used as a separator for batteries. As the polypropylene, not only a homopolymer, but also block and random copolymers can be used. In the block and random copolymers, α-ethylene units other than propylene can be contained as the other copolymer component, and ethylene is preferred as the other α-ethylene unit. However, when compared with using only polyethylene, addition of polypropylene easily reduces the mechanical strength. Thus, the amount of added polypropylene is preferably from 0 to 20% by mass of the polyolefin resin.

In cases where two or more types of polyolefin polymers are combined with the polyolefin resin used in the present invention, ultra-high-molecular-weight polyolefin resins with a weight-average molecular weight of not less than 1.0 × 10⁶ and less than 4.0 × 10⁶ are preferably used as the auxiliary raw materials. The presence of the ultra-high-molecular-weight polyolefin resins can reduce the pore size and enhance the heat resistance, and further increase the strength and elongation.

As the ultra-high-molecular-weight polyolefin resin (UHMwPO), an ultra-high-molecular-weight polyethylene (UHMwPE) polymer is preferably used. The ultra-high-molecular-weight polyethylene may be not only an ethylene homopolymer but also a copolymer containing other α-olefin unit. The α-olefin unit other than ethylene may be as described above.

Furthermore, the above-described main raw material or the raw material used for the purpose of reducing the shutdown temperature has a relatively low molecular weight and thus tends to exhibit reduction in formability as indicated by a large degree of swelling or necking at the output port of a die when the raw material is formed into a sheet. Preferably, an UHMwPO polymer is added because the addition of an UHMwPO polymer as an auxiliary raw material increases the viscosity and strength of the resulting sheet and thus improves the process stability. However, the presence of an UHMwPO polymer in the polyolefin resin at a ratio of not less than 50% by mass will increase the required extrusion load, which in turn reduces the formability during extrusion molding. Thus, the ratio of an UHMwPO polymer is preferably not more than 50% by mass.

That is, the most preferable form of main raw material or raw material used for the purpose of reducing the shutdown temperature in the present invention is a polyethylene resin containing a poly(ethylene-1-hexene) copolymer with a Mw of 1.5 × 10⁵ to 3.0 × 10⁵ and a melting point of 130 to 134°C, wherein the ratio of the polyethylene in the polyethylene resin as a whole, whose ratio is considered as 100% by mass, is not less than 60% by mass.

The combination ratio of the polyolefin resin and a plasticizer may be appropriately selected within the range that would not compromise the moldability, in which the ratio of the polyolefin resin is from 10 to 40% by mass where the ratios of the polyolefin resin and the plasticizer add up to 100% by mass. The presence of the polyolefin resin at a ratio of not less than 10% by mass (the presence of the plasticizer at a ratio of not more than 90% by mass) can prevent swelling and necking at the output port of a die when the raw material is formed into a sheet, which in turn improves sheet and film formation. On the other hand, the presence of the polyolefin resin at a ratio of less than 40% by mass (the presence of the plasticizer at a ratio of more than 60% by mass) can prevent the increase of pressure during the film production process, which leads to excellent moldability.

Additionally, the porous polyolefin film of the present invention may contain various additives, such as an antioxidant, a thermal stabilizer, an antistatic agent, an ultraviolet absorber, and furthermore, an antiblocking agent and a filler, as long as the effects of the present invention are not compromised. In particular, an antioxidant is preferably added for the purpose of preventing the oxidative degradation of the polyethylene resin due to the thermal history. As the antioxidant, for example, at least one selected from the group consisting of, for example, 2,6-di-*t-*butyl-p-cresol (BHT; molecular weight: 220.4), 1,3,5-trimethyl-2,4,6-Tris(3,5-di-*t-*butyl-4-hydroxybenzyl)benzene (for example, Irganox® 1330 manufactured by BASF; molecular weight: 775.2), and tetrakis[methylene-3(3,5-di-*t*-butyl-4-hydroxyphenyl)propionate]methane (for example, Irganox® 1010 manufactured by BASF; molecular weight: 1177.7) is preferably used. Appropriate selection of the types and addition amount of an antioxidant and a thermal stabilizer is important to modify or enhance the properties of the microporous film.

The microporous polyolefin film of the present invention may have a monolayer or multilayer structure, and a multilayer structure is preferred from the viewpoint of the balance between physical properties. The raw materials, raw material ratio, and raw material composition used for a shutdown-function layer may fall within the above ranges. In cases where a preparation made of the above combination of raw materials is applied for layer formation and the resulting layer is used as a shutdown-function layer, the shutdown-function layer preferably occupies 10% or more of the total film thickness. The presence of the shutdown-function layer at a ratio of 10% will provide excellent shutdown performance.

The reduced shutdown temperature has allowed a separator with enhanced toughness to melt and form an insulation layer with winding together with electrodes, as well as resulted in early reduction in heat generation by a shot circuit, indicating the effectiveness of the reduced shutdown temperature and the enhanced toughness against destructive tests, such as nailing test.

A raw material with a low melting point or a low molecular weight is effectively used to reduce the shutdown temperature. However, the use of the raw material with a low melting point leads to pore blockage during a heat treatment in the film production process and to failure to provide excellent porosity. Excellent strength and elongation (toughness) are achieved by an increased molecular weight. However, the increase in molecular weight is accompanied by an increase in the melting point of the raw material, which in turn increases the shutdown temperature while being capable of preventing the pore blockage during the heat treatment and of providing excellent porosity. Accordingly, there has been a trade-off between the above-described three parameters, particularly between shutdown performance and porosity, which respectively indicate the safety and output performance of batteries, suggesting a problem with the balance between battery performance and safety.

That is, in a relation between three factors consisting of porosity, shutdown temperature, and strength, an improvement in any one of the three factors leads to a deterioration in the other two.

For example, a technique, such as increasing the draw ratio, reducing the stretching temperature, or using a raw material with a high molecular weight and a high melting point, is usually taken to increase the porosity. In addition to the high melting point of the raw material, the resulting high porosity leads to an increased volume of pores to be blocked, which in turn results in increase (deterioration) in shutdown temperature. Furthermore, the strength is also deteriorated due to a reduced amount of the resin used.

A technique, such as reducing the draw ratio or using a raw material with a low molecular weight and a low melting point, is taken to reduce the shutdown temperature. However, stretching is insufficiently performed in these techniques, which leads to a film with poor strength as well as with low quality. Furthermore, the use of the raw material with a low melting point increases the chance of pore blockage during heat treatment and leads to failure to provide excellent porosity.

A technique, such as increasing the draw ratio or using a raw material with a high molecular weight and a high melting point, is usually taken to increase the strength, but the technique results in an increased shutdown temperature due to the increased melting point resulting from the enhanced orientation or the increased melting point of the raw material. The increased melting point prevents deterioration of porosity during heat treatment, while the increased draw ratio results in compaction (collapse) of pores and a reduction of porosity.

From the crystallographic perspective, polyolefins have both crystalline and amorphous regions, such as elongated chain and lamellar crystalline, and the amorphous region further includes entangled segments with tie molecules and freely movable segments such as cilia. The amorphous region is formed by either end of or side chains of the crystal region, and an increased tie-molecule density in the amorphous region leads to constraining crystals to each other, which is considered to cause an increase in melting point and a reduction in shutdown property. When the melting point is decreased, both the amorphous and crystal regions move more freely, which increases the chance of pore blockage and improves the shutdown property. Thus, the shutdown temperature is to some extent related to the film melting point.

The film melting point is preferably 133°C or higher in view of the balance between shutdown temperature and porosity. The stretching and heat treatment in the film production process are normally performed at a temperature between the crystallization temperature and the melting point, as described below. Thus, a lower film melting point provides a higher shutdown property, but increases the chance of pore blockage during the stretching and heat treatment. A film melting point of 133°C or higher provides excellent shutdown property as well as excellent porosity. The film melting point is preferably 137°C or lower, more preferably 136°C or lower, further preferably 135°C or lower, in view of shutdown temperature. A film melting point of 137°C or lower will make it easier to keep the balance between porosity and shutdown temperature, and can improve the relationship between shutdown temperature and porosity, which has conventionally been a trade-off relation.

As described above, the shutdown temperature is to some extent related to the film melting point, and the film melting point has a significant effect on the porosity, particularly in terms of film formation. Thus, the shutdown temperature is preferably lower than the film melting point.

The porous polyolefin film of the present invention is a porous polyolefin film having at least one layer, wherein a value represented by Tm - TSD is not less than 0, where TSD represents the shutdown temperature (°C), and Tm represents the lowest among the melting point(s) (°C) of all the layer(s). The value of Tm - TSD is preferably not less than 1, more preferably not less than 1.5, further preferably not less than 2, yet further preferably not less than 4. In cases where the value of Tm - TSD is less than 0, the film melting point Tm is too low and causes low polymer crystallinity and insufficient pore opening during the stretching process, which have sometimes resulted in low output performance or low battery safety due to the high shutdown temperature. Although a larger value of Tm - TSD is more preferred in view of the balance between output performance and safety, the upper limit of the value is around 15. To keep the value of Tm - TSD within the above range, it is desired that the raw material composition of the film and, moreover, the stretching and heat-setting conditions during the film production fall within the following ranges.

When the value of Tm - TSD is not less than 0, it means that the film shutdown temperature is not more than the film melting point. Typically, the shutdown temperature of a porous film has been reduced by a technique in which a low-melting-point polymer that melts at a low temperature is added as a raw material. However, low-melting-point polymers have low crystallinity and exhibit insufficient pore opening during the stretching process, and cause a tendency to reduce the porosity of the resulting porous film, which has made it difficult to achieve both output performance and safety of batteries. In the present invention, the balance between output performance and safety of batteries has been successfully maintained by using a particular polyethylene as a raw material to allow the raw material composition to fall within the following region and, moreover, by allowing the stretching and heat-setting conditions during the film production to fall within the following ranges, by which a condition given by Tm - TSD ≥ 0 is satisfied.

Additionally, an α-olefin copolymer is preferred as a raw material for polyethylene, and hexene-1 is more preferred, in view of high toughness and control of film melting point. In addition, a lower draw ratio is preferred because crystals should be constrained to each other when the shutdown temperature is controlled during the film production process.

A separator forms an insulation layer with winding together with electrodes when subjected to a nailing test. Thus, a higher level of safety against destructive tests is achieved by enhancing the toughness of a separator than the safety is achieved by controlling only the shutdown temperature. Therefore, the value representing the toughness of a separator, which is calculated by (tensile elongation (%) in the machine direction (MD) × tensile strength (MPa) in the machine direction (MD) + tensile elongation (%) in the transverse direction (TD) × tensile strength (MPa) in the transverse direction (TD))/2, is preferably not less than 12,500, more preferably not less than 13,000, further preferably not less than 13,700, yet further preferably not less than 14,000. On the other hand, enhancement of toughness requires increasing the molecular weight of a raw material used or increasing the draw ratio, as described above, which in turn increases the melting point and the shutdown temperature. Thus, the toughness is preferably not more than 30,000, more preferably not more than 20,000, further preferably not more than 18,000. In addition, it is desired that the raw material composition of the film fall within the aforementioned range and, moreover, the stretching condition during the film production fall within the following ranges, to keep the toughness within the above range.

Additionally, the battery safety is compromised when breakage occurs in a separator due to the presence of foreign matter, such as electrodes and dendrites. However, the porous polyolefin film of the present invention provides good foreign matter resistance due to the high porosity, low shutdown temperature, and high toughness.

In the porous polyolefin film of the present invention, the tensile strength in the MD or the TD (hereinafter sometimes referred to simply as "tensile strength MD, or MMD" or "tensile strength TD, or MTD") is preferably not more than 300 MPa, more preferably not more than 200 MPa, further preferably not more than 180 MPa. Typically, tensile strength and tensile elongation are in a trade-off relation. Thus, a tensile strength of not more than 300 MPa will provide excellent elongation, which in turn leads to enhancement of toughness. In addition, the tensile strength is preferably not more than 300 MPa in view of stretching-induced orientation, prevention of increase in film melting point, and prevention of increase in shutdown temperature.

Both MMD and MTD are preferably not less than 80 MPa. The tensile strength is more preferably not less than 90 MPa, further preferably not less than 100 MPa, most preferably not less than 120 MPa. If the tensile strength is less than 80 MPa, a short circuit occurs easily in the film during the winding process or due to the presence of foreign matter in batteries, which reduces the safety of batteries. From the viewpoint of improving the safety, a higher tensile strength is more desirable, but the upper limit of tensile strength is around 300 MPa since a trade-off often occurs between lower shutdown temperature and higher tensile strength. To keep the tensile strength within the above range, it is desired that the raw material composition of the film and, moreover, the stretching condition during the film production fall within the following ranges.

In the present invention, the direction in which a film travels during the film production is called film forming direction, machine direction, or MD, while the direction perpendicular to the film forming direction on the film surface is called transverse direction or TD.

From the viewpoint of preventing film breakage due to the presence of electrode active materials or the like, the anti-piercing strength of a film with a film thickness of 20 µm is preferably not less than 4.0 N, more preferably not less than 5.0 N, further preferably not less than 5.5 N, yet further preferably not less than 6.5 N. An anti-piercing strength of not less than 4.0 N will provide good battery safety by preventing short-circuit formation in the film during the winding process or due to the presence of foreign matter in batteries. From the viewpoint of improving the safety, a higher anti-piercing strength is more desirable, but the upper limit of anti-piercing strength is around 15 N since a trade-off often occurs between lower shutdown temperature and higher anti-piercing strength. To keep the anti-piercing strength within the above range, it is desired that the raw material composition of the film and, moreover, the stretching condition during the film production fall within the following ranges.

The anti-piercing strength of a film with a film thickness of 20 µm refers to the anti-piercing strength L2 calculated by the following formula: L2 = (L1 × 20)/T1, where L1 represents the anti-piercing strength of a microporous film with a film thickness of T1 (µm). Hereinafter, the term "anti-piercing strength" is used with the meaning of "the anti-piercing strength of a film with a film thickness of 20 µm," unless the film thickness is specifically specified. Use of the microporous film of the present invention can prevent pin-hole or crack formation and increase the production yield during battery assembly. Advantageously, the same level of anti-piercing strength as those achieved by conventional technologies is maintained, while the shutdown temperature is kept low.

For the porous polyolefin film of the present invention, the air permeation resistance is a value measured in accordance with JIS P 8117 (2009). In this specification, the term "air permeation resistance" is used with the meaning of "the air permeation resistance of a film with a film thickness of 20 µm," unless the film thickness is specifically specified. When the measured air permeation resistance is represented by P1, the air permeation resistance of a film with a film thickness of 20 µm refers to the air permeation resistance P2, which is calculated by the following formula: P2 = (P1 × 20)/T1. The air permeation resistance (Gurley number) is preferably not more than 1,000 sec/100 cc, more preferably not more than 700 sec/100 cc. An air permeation resistance of not more than 1,000 sec/100 cc can provide good ion permeability and reduce the electrical resistance.

The thermal shrinkage ratios in the MD and the TD observed after keeping the temperature at 105°C for 8 hours is preferably not more than 20%, more preferably not more than 12%, further preferably not more than 10%. When the thermal shrinkage ratio falls within the above range, the area where an internal short circuit occurs is prevented from expanding even if abnormal local heating occurs, whereby the influence of the internal short circuit can be minimized.

Next, the method of producing the porous polyolefin film of the present invention will be specifically described. The production method of the present invention comprises the following steps (a) to (e):
(a) melt-kneading polymer materials including a simple polyolefin polymer, a polyolefin mixture, a polyolefin-solvent mixture, or a kneaded mixture with polyolefin;
(b) extruding the solution and forming it into a sheet dissolution under cooling for solidification;
(c) stretching the obtained sheet by using a roller or a tenter;
(d) removing a plasticizer from the resulting stretched film and drying the film; and then
(e) subjecting the resulting stretched material to heat treatment/re-drawing.

Each of the steps is described below.

### (a) Preparation of Polyolefin Solution

A polyolefin solution is prepared by dissolving a polyolefin resin in a plasticizer under heating. The plasticizer is not specifically limited as long as it is a solvent that can sufficiently dissolve the polyolefin resin. However, the solvent is preferably a liquid at room temperature, to allow stretching to a relatively high draw ratio. The solvent includes aliphatic, alicyclic, or aromatic hydrocarbons, such as nonane, decane, decalin, paraxylene, undecane, dodecane, and liquid paraffin, and mineral oil fractions with boiling points equal to those of the hydrocarbons; and phthalate esters, such as dibutyl phthalate and dioctyl phthalate, which are liquids at room temperature. A nonvolatile liquid solvent like liquid paraffin is preferably used to obtain a gel sheet with a stable liquid solvent content. A solid solvent may be mixed with polyethylene in melt-kneading, or be mixed with a liquid solvent at room temperature. Examples of such a solid solvent include stearyl alcohol, ceryl alcohol, and paraffin wax. However, use of a solid solvent alone may cause problems such as uneven film stretching.

The liquid solvent preferably has a viscosity of 20 to 200 cSt at 40°C. If the viscosity is not less than 20 cSt at 40°C, a sheet formed by extrusion of the polyolefin solution from a die is less uneven. On the other hand, a viscosity of not more than 200 cSt will facilitate removal of the liquid solvent. In addition, the viscosity of the liquid solvent is a viscosity measured at 40°C using a Ubbelohde type viscometer.

### (b) Formation of Extruded Product and Gel Sheet

The consistent melt-kneading of the polyolefin solution is not specifically limited, but is preferably performed in a twin-screw extruder when preparation of a conc. polyolefin solution is needed. Various additives such as antioxidant may be added as necessary, as long as the effects of the present invention are not compromised. In particular, an antioxidant is preferably added for the prevention of polyolefin oxidation.

The polyolefin solution is homogeneously mixed in the extruder at a temperature high enough to completely melt the polyolefin resin. The melt-kneading temperature varies depending on the polyolefin resin used, and is preferably from (the melting point of the polyolefin resin + 10°C) to (the melting point of the polyolefin resin + 120°C), further preferably from (the melting point of the polyolefin resin + 20°C) to (the melting point of the polyolefin resin + 100°C). In this respect, the melting point refers to the value measured by DSC in accordance with JIS K 7121 (1987) (the same shall apply hereinafter). For example, the melt-kneading temperature for polyethylene is preferably within the range from 140 to 250°C, further preferably from 160 to 230°C, most preferably from 170 to 200°C. Specifically, when a polyethylene composition has a melting point of about 130 to 140°C, the melt-kneading temperature is preferably from 140 to 250°C, most preferably from 180 to 230°C.

From the viewpoint of preventing degradation of the resin, a lower melt-kneading temperature is more desirable. However, a melt-kneading temperature lower than the above-described temperature range may cause the presence of an unmelted portion of the resin in the material extruded from the die, which may result in, for example, film breakage during the subsequent stretching step, while a melt-kneading temperature higher than the above-described temperature range may cause enhanced thermal degradation of polyolefin and deterioration in the physical properties, such as strength and porosity, of the resulting microporous film. In addition, degradation products are deposited on a chill roller or a roller for the stretching step and attached to a sheet on the roller, which deteriorates the appearance of the sheet. Thus, the kneading is preferably performed at a temperature within the above range.

Next, cooling of the obtained extruded product provides a gel sheet, and can stabilize the polyolefin with a solvent-induced microphase-separated structure. The gel sheet is preferably cooled down to a temperature of 10 to 50°C during the cooling step. This is because it is preferred that the final cooling temperature be not higher than the crystallization end temperature, which results in formation of a dense superstructure and the resulting promotion of steady stretching during the subsequent stretching step. Thus, cooling is preferably continued at a rate of not less than 30°C/min until the temperature reaches at least the gelation temperature. In general, a slow cooling rate results in the formation of relatively large crystals, which causes the gel sheet to have a coarse superstructure and also an expanded gel structure. In contrast, a fast cooling rate results in formation of relatively small crystals, which causes the gel sheet to have a dense superstructure and leads to increased film toughness as well as steady stretching.

Examples of the cooling method include a method which includes direct contact with cold air, cold water, or other cold media, a method which includes contact with a coolant-cooled roller, and a method which uses, for example, a casting drum.

Although the method for monolayer microporous film preparation has been described, the microporous polyolefin film of the present invention is not limited to a monolayer film but may be a multilayer film. The number of layers is not specifically limited, and the multilayer film may be a bilayer film or a film with three or more layers. In addition to the polyethylene as described above, an optional resin may be contained in each layer of the multilayer system, to the extent that the effects of the present invention are not compromised. Any conventional method can be used as a method for preparation of multilayer microporous polyolefin films. For example, a method includes preparing optional resins as necessary, individually feeding and melting these resins in an extruder at a desired temperature, gathering the melted resins together in a polymer tube or a die, and extruding each melted resin from each slit of the die with each desired thickness to form a multilayer body.

### (c) Stretching Step

The obtained gel sheet (including a multilayer sheet) is stretched. Examples of the stretching method used include uniaxial MD stretching on a roll stretching machine, uniaxial TD stretching on a tenter, sequential biaxial stretching on a combination of a roll stretching machine and a tenter or a combination of tenters, and simultaneous biaxial stretching on a simultaneous biaxial tenter. The draw ratio varies depending on the thickness of a gel sheet, and a stretching to a draw ratio of not less than 5 in either direction is preferred in view of the homogeneity of film thickness. The area draw ratio is preferably not less than 25, further preferably not less than 36, yet more preferably not less than 49. At an area draw ratio of less than 25, the film uniformity is easily impaired due to the insufficient stretching, which can provide no microporous film excellent from the viewpoint of strength. The area draw ratio is preferably not more than 150. A higher area draw ratio leads to more frequent breakage during the microporous film production, which reduces the microporous film production. With an increase of the draw ratio, the orientation is induced, and the crystallinity is increased, and the melting point and strength of the resulting porous substrate are improved. However, the increased crystallinity implies a reduction of the amorphous region, which causes a film to increase the melting point and the shutdown temperature.

The stretching temperature is preferably set to a temperature of not more than the melting point of the gel sheet + 10°C, more preferably a temperature within the range from (the crystalline dispersion temperature Tcd of the polyolefin resin) to (the melting point of the gel sheet + 5°C). Specifically, when a polyethylene composition has a crystalline dispersion temperature of about 90 to 100°C, the stretching temperature is preferably from 90 to 125°C, more preferably from 90 to 120°C. The crystalline dispersion temperature Tcd is determined from the temperature dependence of the dynamic viscoelasticity measured according to ASTM D 4065. At a temperature of less than 90°C, the pore opening is insufficient due to the stretching at the low temperature, which provides a less uniform film thickness and also reduces the porosity. At a temperature of more than 125°C, the sheet is melted and the pore blockage is inclined to occur.

The above stretching induce fragmentation of the superstructure formed in the gel sheet, refinement of the crystalline phase, and formation of many fibrils. The fibrils are irregularly connected to form a three-dimensional network structure. The stretching leads to enlarged pores as well as increase in mechanical strength, which are suitable for separators for batteries. In addition, because the polyolefin is sufficiently plasticized and softened before removal of the plasticizer, the stretching prior to removal of the plasticizer enables smooth progress of fragmentation of the superstructure and uniform refinement of the crystalline phase. Moreover, fragmentation is facilitated under such a condition, which results in less accumulation of the strain induced during the stretching process, and allows a lower thermal shrinkage ratio as compared to that in the case of stretching post removal of a plasticizer.

### (d) Plasticizer Extraction (Washing) Step and Drying Step

Next, the remaining solvent in the gel sheet is removed using a washing solvent. Because the polyolefin phase is separated from the solvent phase, removal of the solvent provides a microporous film. Examples of the washing solvent include saturated hydrocarbons, such as pentane, hexane, and heptane; chlorinated hydrocarbons, such as methylene chloride and carbon tetrachloride; ethers, such as diethyl ether and dioxane; ketones, such as methyl ethyl ketone; and chain fluorocarbons, such as trifluoroethane. These washing solvents have a low surface tension (for example, 24 mN/m or less at 25°C). By using a washing solvent with a low surface tension, shrinkage is reduced in the microporous network structure due to the surface tension at the gas-liquid interface during drying after washing, which provides a microporous film excellent in porosity and permeability. These washing solvents are appropriately selected depending on the plasticizer used, and are used individually or in combination.

The washing can be performed by, for example, a method in which the gel sheet is immersed for extraction in a washing solvent, a method in which the gel sheet is showered with a washing solvent, or a combination thereof. The volume of a washing solvent used varies depending on the washing method used, but it is generally preferable to use not less than 300 parts by mass of a washing solvent for 100 parts by mass of a gel sheet. The washing temperature may be a temperature of 15 to 30°C and is increased as necessary to a temperature of 80°C or lower. In this treatment, a longer time period during which the gel sheet is immersed in a washing solvent is more desirable from the viewpoints of improving the washing effect of the solvent, maintaining the consistency of physical properties in the TD and/or MD of the resulting microporous film, and improving the mechanical and electrical properties of the resulting microporous film.

The above washing is preferably continued until the residual solvent in the gel sheet after washing, namely the microporous film, is reduced to less than 1% by weight.

Subsequently, the solvent in the microporous film is removed by drying during the drying step. The drying method is not specifically limited, and any method, such as a method using a heated metal roller or a method using hot air, can be selected. The drying temperature is preferably from 40 to 100°C, more preferably from 40 to 80°C. When the drying process is insufficient, the porosity of the microporous film is reduced by the subsequent heat treatment, which reduces the permeability.

### (e) Thermal Treatment / Re-Drawing Steps

The dried microporous film may be stretched again (re-drawn) at least in the uniaxial direction. The re-drawing can be performed by a method using a tenter, similarly to the above-described stretching process, with heating the microporous film. The re-drawing may be performed by uniaxial stretching or biaxial stretching. In the case of multistep stretching, simultaneous biaxial stretching or sequential stretching is incorporated into the re-drawing process.

The temperature during re-drawing is preferably not more than the melting point of the polyolefin composition, more preferably a temperature within the range from (Tcd - 20°C) to the melting point. Specifically, the temperature for the polyethylene composition is preferably from 70 to 135°C, more preferably from 110 to 132°C, most preferably from 120 to 130°C.

The draw ratio during re-drawing in the case of uniaxial stretching is preferably from 1.01 to 1.6, preferably from 1.1 to 1.6 particularly in the case of the TD, more preferably from 1.2 to 1.4, while the draw ratio in the case of biaxial stretching is preferably 1.01 to 1.6 in either the MD or the TD. The draw ratio during re-drawing may be different between those in MD and in TD. Stretching to a draw ratio within the above range can increase the porosity and the permeability, while stretching to a draw ratio of not less than 1.6 causes a film to be more oriented and to increase the melting point and the shutdown temperature. In addition, the ratio of relaxation from the maximum draw ratio during re-drawing is preferably not more than 0.9, further preferably not more than 0.8, in view of thermal shrinkage ratio, wrinkling, and slackening.

### (f) Other Steps

Furthermore, the microporous film may be additionally subjected to hydrophilic treatment depending on the intended use. The hydrophilic treatment can be performed by, for example, grafting of a hydrophilic monomer, treatment with a surfactant, or corona discharging. The grafting of a hydrophilic monomer is preferably performed after cross-linking. A multilayer microporous polyethylene film is preferably cross-linked by irradiation with ionizing radiation, such as α-rays, β-rays, γ-rays, or electron beams. In the case of irradiation with electron beams, an electron beam dose of 0.1 to 100 Mrad and an accelerating voltage of 100 to 300 kV are preferred. By the cross-linking treatment, the melt-down temperature of the multilayer microporous polyethylene film is increased.

In the case of the surfactant treatment, any of non-ionic, cationic, anionic, and amphoteric surfactants can be used, but a non-ionic surfactant is preferably used. A solution prepared by dissolving a surfactant in water or a lower alcohol, such as methanol, ethanol, or isopropyl alcohol, is applied to the multilayer microporous film by dipping or by doctor blade coating method.

The porous polyethylene film of the present invention may be modified by, for example, surface coating with a porous fluorine-based resin, such as polyvinylidene fluoride or polytetrafluoroethylene, or with a porous material, such as polyimide or polyphenylene sulfide, and inorganic coating with ceramics, for the purpose of improving the melt-down property or thermal durability in a case that the porous polyethylene film is used as a separator for batteries.

The thus-obtained porous polyolefin film can be used for a variety of applications including filters, separators for fuel batteries, separators for capacitors, and the like, and can be suitably used as a separator for secondary batteries that need a higher energy density, higher capacity, and higher power for electric vehicles or the like because excellent safety and output performance are achieved when used particularly as a separator for batteries.

### Examples

The present invention will be described below in details by way of examples. The properties were measured and evaluated by the following methods. The method of measuring each property is described below.

### 1. Measurement of Molecular Weight Distribution of Polyolefin

The molecular weight distribution of a polyolefin was measured by high-temperature gel permeation chromatography (GPC) (the weight-average molecular weight (Mw), the molecular weight distribution (Mn), the content of a given component, and the like were measured). The measurement conditions are as described below:

| | |
|---|---|
| • Apparatus: | High-temperature GPC instrument (PL-220; manufactured by Polymer Laboratories; Product No. HT-GPC); |
| • Detector: | Differential refractive index detector RI; |
| • Guard column: | Shodex G-HT; |
| • Column: | Shodex HT806M (2 columns) (φ7.8mm × 30cm; manufactured by Showa Denko K.K.); |
| • Solvent: | 1,2,4-trichlorobenzene (TCB, manufactured by Wako Pure Chemical Industries, Ltd.) (with 0.1% BHT); |
| • Flow rate: 1.0 | mL/min; |
| • Column temperature: | 145°C; |
| • Sample preparation: | Five mL of an assay solvent was added to 5 mg of a sample, and the resulting mixture was heated at a temperature of 160 to 170°C with stirring for about 30 minutes, and the resulting solution was then filtered through a metal filter (pore size: 0.5 µm); |
| • Injection volume: | 0.200 mL; |
| • Standard sample: | Polystyrene monodisperse standards (manufactured by TOSOH Corporation); |
| • Data processing: | GPC data processing system, manufactured by TRC, Inc. |

Subsequently, the determined Mw and Mn were converted in terms of PE. The conversion formulas are as indicated below: $Mw \left(in terms of PE\right) = Mw \left(a measured value in terms of PS\right) \times 0.468 ;$ $Mn \left(in terms of PE\right) = Mn \left(a measured value in terms of PS\right) \times 0.468 ;$ $MwD = Mw / Mn .$

### 2. Melt Mass-Flow Rate (MI or MFR)

The MI of a raw material was measured in accordance with JIS K 7210-2012 by using the Melt Indexer manufactured by Toyo Seiki Seisaku-sho, Ltd.

### 3. Film Thickness

The thickness of a microporous film was measured by using a contact-type thickness gauge at randomly selected positions along the MD The measurement at one of the selected positions was performed at different points spaced 5 mm apart along the TD (the width direction) of the film over a distance of 30 cm. Then, the above measurement along the TD was repeated 5 times, and the resulting arithmetical mean was taken as the thickness of the sample.

### 4. Air Permeation Resistance (sec/100 cc/20 µm)

A microporous film with a film thickness of T1 was assayed on an air permeability tester (EGO-1T; manufactured by Asahi Seiko Co., Ltd.) to measure the air permeation resistance P1, from which the air permeation resistance P2 of the film with a film thickness of 20 µm was calculated by the following formula: P2 = (P1 × 20)/T1.

### 5. Anti-Piercing Strength

A round-tip (curvature radius R: 0.5 mm) needle of 1 mm in diameter was stuck at a travel speed of 2 mm/sec into a microporous film with a mean film thickness of T1 (µm) to measure the maximum load L1 (the load immediately before penetration; unit: N), from which the anti-piercing strength L2 (N/20 µm) of the film with a film thickness of 20 µm was calculated by the following formula: L2 = (L1 × 20)/T1.

### 6. Porosity

The porosity was calculated by the following formula: $Porosity \left(%\right) = 100 \times \left(w2-w1\right) / w 2 ,$ where w1 represents the mass of a microporous film, and w2 represents the mass of a nonporous film made from the same polyolefin composition and having the same size as the microporous film.

### 7. Thermal Shrinkage Ratio

The shrinkage ratio in the MD was measured three times in a microporous film after the film was kept at 105°C for 8 hours, and the average of the measurements was taken as the thermal shrinkage ratio in the MD In addition, the same measurement was performed in the TD to determine the thermal shrinkage ratio in the TD.

### 8. Tensile Strength

The tensile strengths in the MD and the TD were measured using a 10-mm-wide test strip by a method according to ASTM D 882.

### 9. Shutdown and Melt-down Temperatures

The air permeability of a microporous film was measured on an Oken-type air permeability tester (EGO-IT; manufactured by Asahi Seiko Co., Ltd.) with heating at a temperature rising rate of 5°C/min, to determine the temperature at which the air permeability reached the detection limit, 1 × 10⁵ sec/100 cc air, and the temperature was taken as the shutdown temperature (TSD) (°C).

Moreover, after the temperature reached the shutdown temperature, heating was further continued to determine the temperature at which an air permeability of less than 1 × 10⁵ sec/100 cc air was again observed, and the temperature was taken as the melt-down temperature (MDT) (°C).

### 10. DSC Measurement

The heat of fusion was determined with a differential scanning calorimeter (DSC). A MDSC 2920 or Q1000 T zero-DSC calorimeter from TA Instruments was used to perform DSC measurement, and the melting point was calculated in accordance with JIS K 7121-2012. Moreover, for a multilayer microporous film, a piece of each constitutive layer corresponding to about 5 mg was scraped from the microporous film and taken as an evaluation sample.

### 11. Maximum Shrinkage Ratio

A test strip with a length of 10 mm (in the MD) and a width of 3 mm (in the TD) was stretched with a constant force (2 gf) in the direction of measurement by using a thermomechanical analyzer (TMA/SS6600; manufactured by Seiko Instruments & Electronics Ltd.) with heating at a rate of 5°C/min from room temperature, to determine the temperature at which the sample size was minimal in length, and the temperature was taken as the temperature at the maximum shrinkage in the measurement direction, and the shrinkage ratio at the temperature was taken as the maximum shrinkage ratio.

### 12. Ratio Between Shutdown Temperature and Film Melting Point

The ratio between the shutdown temperature and the melting point, which were respectively determined by the techniques described in the sections 8 and 9, was calculated.

### 13. Battery Production and Nailing Test

### a. Battery Production

A cathode slurry comprising 92 parts by mass of Li(Ni_{6/10}Mn_{2/10}Co_{2/10})O₂ as a cathode active material, 2.5 parts by mass each of acetylene black and graphite as cathode conductive additives, and 3 parts by mass of polyvinylidene fluoride as a cathode binder, which were dispersed in N-methyl-2-pyrrolidone using a planetary mixer, was applied on aluminium foil, and the resulting aluminium foil was dried and rolled to produce a cathode sheet (coating weight per unit area: 9.5 mg/cm²). The cathode sheet was cut into pieces with a size of 80 mm × 80 mm. At the same time, an area for attachment of a current collector tab, which was free of the active material and had a size of 5 mm × 5 mm, was prepared for each piece by cutting the same cathode sheet in such a manner that the area extended outward from the active material surface, to which an aluminium tab with a width of 5 mm and a thickness of 0.1 mm was attached by ultrasonic welding.

An anode slurry comprising 98 parts by mass of natural graphite as an anode active material, 1 part by mass of carboxymethyl cellulose as a thickener, and 1 part by mass of a styrene-butadiene copolymer as an anode binder, which were dispersed in water using a planetary mixer, was applied on copper foil, and the resulting copper foil was dried and rolled to produce an anode sheet (coating weight per unit area: 5.5 mg/cm²). The anode sheet was cut into pieces with a size of 90 mm × 90 mm. At the same time, an area for attachment of a current collector tab, which was free of the active material and had a size of 5 mm × 5 mm, was prepared for each piece by cutting the same anode sheet in such a manner that the area extended outward from the active material surface. A copper tab with the same size as the cathode tab was attached to the area for tab attachment by ultrasonic welding.

Next, a separator for secondary batteries was cut into pieces with a size of 100 mm × 100 mm. A group of electrodes was prepared by forming 10 stacks of cathode, separator, and anode layers, where each stack was prepared by placing the above cathode and anode on both sides of each piece of the separator for secondary batteries in such a manner that both the active material layers were separated by the separator and that the cathode material deposition and anode material deposition surfaces faced each other. The above stacks of cathode, separator, and anode layers were wrapped in a sheet of an aluminum laminated film with a size of 150 mm × 330 mm, and the aluminum laminated film was folded along the long side and heat-sealed on the two long sides to form a bag.

In a mixed solvent of ethylene carbonate : diethyl carbonate = 1:1 (volume ratio), LiPF₆ as a solute was dissolved to a concentration of 1 mol/L, and the resulting solution was used as an electrolyte solution. The bag made of the aluminum laminated film was filled with 15 g of the electrolyte solution under reduced pressure for impregnation, and was heat-sealed on the short sides of the aluminum laminated film to prepare a laminate-type battery.

### b. Nailing Test

The battery produced in the above section a. was charged at 0.5 C up to 4.2 V (SOC: 100%), and was subjected three times to a nailing test, where a nail with a diameter 3 mm and a tip radius R of 0.9 mm and with a travel speed of 0.1 mm/sec was used at an environmental temperature of 25°C for the measurement. In the conditions, the test was terminated when the voltage was reduced by 100 mV.

The criteria are shown below; batteries graded B or higher are practically acceptable, and batteries graded A are preferred due to their high energy density and high capacity.

### [Acceptance Decision]

A: No fume/no fire (Excellent)
B: Fuming in 1/3 (no fire) (Good)
C: Fuming in 2/3 or more, or firing in 1/3 or more (Poor)

### 13. Foreign Matter Resistance Test

A tensile tester (Autograph) (AGS-X; manufactured by Shimadzu Corporation) was used together with a 1.5 V capacitor and a data logger to perform a foreign matter resistance test on an elementary battery, which comprised an anode, a separator, a chromium ball with a diameter of 500 µm, and an aluminium foil in the described order, with pressing the elementary battery at a speed of 0.3 mm/min, and the evaluation was performed based on the distance traveled until a short circuit was formed in the battery. A sample that showed no short-circuit formation even after a longer distance of travel has a higher level of foreign matter resistance. The relationship between traveled distance and foreign matter resistance was expressed based on the following three-score scale:
A: A traveled distance (mm)/separator thickness (µm) of not less than 0.015;
B: A traveled distance (mm)/separator thickness (µm) of 0.01 to 0.015;
C: A traveled distance (mm)/separator thickness (µm) of less than 0.01.

The present invention will be specifically described below by way of examples.

### (Example 1)

An ethylene-1-hexene copolymer with a Mw of 0.30 × 10⁶, an MwD (Mw/Mn) of 18, an MFR of 2.0 g/10 min, and a melting point of 134°C (PE(3) indicated in Table 1) was used as a raw material. To 30% by mass of the polyethylene composition, 70% by mass of liquid paraffin was added, and 0.5% by mass of 2,6-di-*t*-butyl-*p*-cresol and 0.7% by mass of tetrakis[methylene-3-(3,5-di-*t-*butyl-4-hydroxyphenyl)-propionate]methane with respect to the mass of the polyethylene in the mixture were further added as antioxidants, and the resulting mixture was mixed to prepare a polyethylene resin solution.

The obtained polyethylene resin solution was introduced into a twin-screw extruder, kneaded at 180°C, and fed into a T-shaped die to extrude a microporous sheet with a final film thickness of 20 µm, and the extruded product was then cooled on a cooling roller whose temperature was controlled at 25°C to form a gel sheet.

The obtained gel sheet was stretched at 115°C on a tenter-stretching machine in both the machine and transverse directions by simultaneous biaxial stretching to a draw ratio of 7 (an area draw ratio of 49), and was directly subjected to heat setting at 115°C for 10 seconds on the tenter-stretching machine with fixing the sheet width.

Subsequently, the stretched gel sheet was immersed in methylene chloride in a wash tub, and dried after removal of the liquid paraffin to obtain a microporous polyolefin film.

Finally, an oven with multiple partitioned zones which were arranged in the machine direction was used as an oven for the tenter-stretching machine to perform a heat treatment at 125°C without stretching in each zone.
The properties of the raw material for the microporous polyolefin film are presented in Table 1, while the film production conditions and the results of the evaluation of the microporous film are presented in Table 2.

### (Examples 2 to 6)

Microporous polyolefin films were produced in the same manner as in Example 1, except that raw materials indicated in "the properties of raw materials for microporous polyolefin films (Table 1)" were used, and that the film production conditions were changed as indicated in Table 2. The results of the evaluation of the obtained microporous polyolefin films are as presented in Table 2.

### (Comparative Example 1)

A HDPE polymer with a Mw of 0.30 × 10⁶, an MwD (Mw/Mn) of 6, an MFR of 3.0 g/10 min, and a melting point of 136°C (PE(1) indicated in Table 1) was used as a raw material. To 30% by mass of the polyethylene composition, 70% by mass of liquid paraffin was added, and 0.5% by mass of 2,6-di-*t*-butyl-*p*-cresol and 0.7% by mass of tetrakis[methylene-3-(3,5-di-*t*-butyl-4-hydroxyphenyl)-propionate]methane with respect to the mass of the polyethylene in the mixture were further added as antioxidants, and the resulting mixture was mixed to prepare a polyethylene resin solution.

The obtained polyethylene resin solution was introduced into a twin-screw extruder, kneaded at 180°C, and fed into a T-shaped die to extrude a microporous sheet with a final film thickness of 20 µm, and the extruded product was then cooled on a cooling roller whose temperature was controlled at 25°C to form a gel sheet.

The obtained gel sheet was stretched at 115°C on a tenter-stretching machine in both the machine and transverse directions by simultaneous biaxial stretching to a draw ratio of 9 (an area draw ratio of 81), and was directly subjected to heat setting at 115°C for 10 seconds on the tenter-stretching machine with fixing the sheet width.

Subsequently, the stretched sheet was immersed in methylene chloride in a wash tub, and dried after removal of the liquid paraffin to obtain a microporous polyolefin film.

Finally, an oven with multiple partitioned zones which were arranged in the machine direction was used as an oven for the tenter-stretching machine to perform a heat treatment at 125°C without stretching in each zone.

### (Comparative Examples 2 to 12)

Microporous polyolefin films were produced in the same manner as in Comparative Example 1, except that raw materials indicated in "the properties of raw materials for microporous polyolefin films (Table 1)" were used, and that the film production conditions were changed as indicated in Table 3.

In Comparative Examples 1 to 12, the results of the evaluation of the obtained microporous polyolefin films are as presented in Table 3.

In Example 1, a PE polymer with a Mw of 300,000 and a melting point of 134°C is used. Because the raw material used has a lower melting point than that in Comparative Example 1 as described below, a lower shutdown temperature is achieved, which provides excellent nailing resistance. In addition, Example 1 is superior in that pore blockage during heat treatment is prevented and a high level of porosity is maintained due to the use of the raw material with a relatively high melting point. Furthermore, the lower draw ratio in Example 6 than that in Comparative Example 1 results in a lower shutdown temperature and a high degree of toughness, as well as in excellent nailing and foreign matter resistances, which means that higher microporous film properties than those achieved by conventional technologies are provided.

Examples 2 to 4 use ethylene-1-hexene copolymers with lower melting point and lower molecular weights than those of the raw materials used in Comparative Examples 7 to 10. Thus, a shutdown temperature of 130°C or lower is maintained even in the cases where a high draw ratio is used, which provides excellent nailing resistance. Because those copolymers are different from the raw materials with low melting point used in the following additional Comparative Examples, the same level of porosity as that achieved by conventional technologies is maintained and excellent microporous film properties are provided.

The raw material used in Example 5 has a higher molecular weight than that used in Example 1, and thus leads to a high degree of toughness, but an increased tie-molecule density results in constrained motion of crystals, which is considered as a cause of the increased shutdown temperature. However, a relatively low shutdown temperature is still maintained and a high level of porosity and excellent nailing and foreign matter resistances are achieved because a raw material with a melting point of 133°C, which is lower than that of the raw material used in Example 1, is used, as well as an ethylene-1-hexene copolymer is used to control the entanglement in the amorphous region.

In Comparative Example 1, the use of a raw material with a high melting point provided excellent porosity, but the stretching to a high draw ratio enhanced the orientation of the HDPE with a relatively low molecular weight, which resulted in increased strength and reduced elongation, and thus excellent toughness was not provided. In addition, the enhanced orientation caused the microporous film to increase the melting point until the difference between the melting point and the shutdown temperature became -1.9°C, and excellent nailing resistance was not provided due to the increased shutdown temperature.

In Comparative Example 3, the draw ratio was changed to 5 × 5, and a UHMwPE polymer was added. Although the reduction in draw ratio increased the elongation and thus provided excellent toughness, the shutdown temperature was high and excellent nailing resistance was not provided because, similarly to Comparative Examples 1 and 2, the HDPE polymer was used.

In Comparative Examples 4 to 6, PE polymers with low molecular weights and low melting points were used and the draw ratios used were reduced, which has resulted in the reduced melting and shutdown temperatures in the microporous films. Thus, good nailing resistance is provided. In particular, a high degree of toughness is achieved in the systems to which the UHMwPE polymer has been added, which has provided good foreign matter resistance. However, the use of the raw material with a low melting point resulted in pore blockage during the heat treatment and thus reduced the porosity.

Raw materials used in Comparative Examples 7 to 9 have higher molecular weights than that used in Example 1, which leads to a relatively high degree of toughness even in the cases where a relatively high draw ratio is used. In addition, relatively low shutdown temperatures (TSD) were maintained by using the raw materials with low melting points, which are lower than that of the raw material used in Example 1, as well as using an ethylene-1-hexene copolymers to control the entanglement in the amorphous region. In particular, Comparative Example 9 includes the addition of the UHMwPE, which provides good toughness. Thus, the films of the Comparative Examples have practically acceptable foreign matter and nailing resistances, but were insufficient for design of batteries with higher energy density and higher capacity. Therefore, there remains room for improvement in TSD and in the difference between film melting point and TSD.

In Comparative Examples 10 to 12, the UHMwPE or the HDPE is added to the polymer used in Example 5. The addition of the UHPE or the HDPE reduced the ratio of the main raw material in the total PE resin, by which the TSD and the difference between film melting point and TSD were made insufficient. Thus, the films of the Comparative Examples have practically acceptable foreign matter and nailing resistances, but were insufficient for design of batteries with higher energy density and higher capacity.

### (Example 7)

For a first polyolefin solution, a mixture was prepared by combining 100 parts by mass of a polyolefin resin, which was composed of a polyethylene polymer with a weight-average molecular weight (Mw) of 1.8 × 10⁵ (PE(4)), with 0.2 parts by mass of tetrakis[methylene-3-(3,5-di-*tert*-butyl-4-hydroxyphenyl)-propionate]methane as an antioxidant. Into a twin-screw extruder, 30 parts by mass of the obtained mixture and 70 parts by mass of liquid paraffin were introduced, and the resulting mixture was melt-kneaded under the same conditions as above to prepare the first polyolefin solution.

For a second polyolefin solution, a mixture was prepared by combining 100 parts by mass of a second polyolefin resin, which was composed of 40 parts by mass of an ultra-high-molecular-weight polyethylene polymer with a Mw of 2.0 × 10⁶ (PE(6)) and 60 parts by mass of a high-density polyethylene polymer with a Mw of 3.0 × 10⁵ (PE(1)), with 0.2 parts by mass of tetrakis[methylene-3-(3,5-di-*tert*-butyl-4-hydroxyphenyl)-propionate]methane as an antioxidant. Into a twin-screw extruder, 25 parts by mass of the obtained mixture and 75 parts by mass of liquid paraffin were introduced, and the resulting mixture was melt-kneaded under the same conditions as above to prepare the second polyolefin solution.

The first and second polyolefin solutions were separately fed from the twin-screw extruders through filters to remove foreign matters and then into a three-layer T-shaped die, and were then extruded as three layers composed of the first polyolefin solution, the second polyolefin solution, and the first polyolefin solution. The extruded product was cooled on a cooling roller whose temperature was adjusted at 30°C with stretching at a speed of 2 m/min to form a tri-layer gel sheet.

The tri-layer gel sheet was stretched at 115°C on a tenter-stretching machine in both the MD and the TD by simultaneous biaxial stretching to a draw ratio of 5. The stretched tri-layer gel sheet was anchored to an aluminium frame with a size of 20 cm × 20 cm, immersed in a methylene chloride bath adjusted at 25°C for 3 minutes with shaking at 100 rpm to remove the liquid paraffin, and then air-dried at room temperature.

The obtained dried film was subjected to heat setting at 120°C for 10 minutes. The thickness of the resulting porous polyolefin film was 25 µm, and the thickness ratio of the layers was 1/4/1. The combination ratio of the constitutive components, the production conditions, the results of the evaluation, and the like are presented in Table 4.

A low shutdown temperature (TSD) derived from the layers of the first polyolefin solution and good toughness and porosity derived from the layer of the second polyolefin solution were obtained as a result of stacking the layers of the polyethylene polymer (PE(4)), which is the most preferred form of raw material used for the purpose of reducing the shutdown temperature, and of the blend of the HDPE with a high melting point and a relatively low molecular weight and the UHPwPE. Thus, higher porosity than that in Example 3 was provided, while good nailing and foreign matter resistances were maintained.

### (Comparative Example 13)

A multilayer microporous polyolefin film was produced in the same manner as in Example 7, except that raw materials indicated in "the properties of raw materials for microporous polyolefin films (Table 1)" were used, and that the film production conditions were changed as indicated in Table 4. The results of the evaluation of the obtained microporous polyolefin films are as presented in Table 4.

Although the stacking of the layers with different functions improved the porosity, as compared with Comparative Example 5, with maintaining good nailing and foreign matter resistances, the improvement of porosity was not sufficient.

FIG. 1 shows SEM images from Example 2 and Comparative Example 4, and indicates that the pore structure of each obtained porous film greatly varies depending on the raw material and draw ratio used.

**Table 1**

| | MFR (g/10 min) 21.6 kg at 190°C | η (dl/g) | Mw | MwD | Tm (°C) | Density (g/cm³) | Component |
|---|---|---|---|---|---|---|---|
| PE (1) | 3 | - | 300 kD | 6 | 136 | 0.95 | HDPE |
| PE (2) | 2 | - | 350 kD | 15 | 133 | 0.95 | ethylene-1-hexene copolymer |
| PE (3) | 2 | - | 300 kD | 18 | 134 | 0.95 | ethylene-1-hexene copolymer |
| PE (4) | 15 | - | 180 kD | 10 | 132 | 0.95 | ethylene-1-hexene copolymer |
| PE (5) | 10 | - | 100 kD | 15 | 127 | 0.95 | HDPE |
| PE (6) | - | 16 | 2000 kD | 6 | 133 | 0.93 | UHMwPE |
| PE (7) | 10 | - | 40 kD | 4 | 123 | 0.95 | HDPE |

**Table 2**

| Items | | Example 1 | Example 2 | Example 3 | Example 4 | Example 5 | Example 6 |
|---|---|---|---|---|---|---|---|
| 1st PE | PE (1) | | | | | | |
| | PE (2) | | | | | 100 | |
| | PE (3) | 100 | | | | | 100 |
| | PE (4) | | 100 | 100 | 60 | | |
| | PE (5) | | | | | | |
| 2nd PE | PE (6) | | | | 40 | | |
| 3rd PE | PE (7) | | | | | | |
| Resin conc. (%) | | 30 | 35 | 35 | 25 | 30 | 30 |
| Draw ratio | MD | 7 | 9 | 5 | 5 | 5 | 5 |
| | TD | 7 | 9 | 5 | 5 | 5 | 5 |
| Film thickness (µm) | | 20 | 20 | 20 | 20 | 20 | 20 |
| Porosity (%) | | 48 | 41 | 41 | 42 | 47 | 43 |
| Air permeation resistance (sec/100 cc/20 µm) | | 310 | 140 | 700 | 510 | 280 | 425 |
| Anti-piercing strength (N at 20 µm) | | 6.0 | 8.9 | 4.0 | 4.6 | 4.0 | 4.2 |
| Tensile strength (MPa) | MD | 155 | 176 | 103 | 103 | 105 | 108 |
| | TD | 155 | 172 | 103 | 103 | 104 | 115 |
| Tensile elongation (%) | MD | 110 | 80 | 140 | 160 | 160 | 160 |
| | TD | 115 | 80 | 140 | 160 | 160 | 165 |
| Strength (MPa) × Elongation (%) | MD | 17050 | 14112 | 14406 | 16464 | 16777 | 17248 |
| | TD | 17825 | 13720 | 14406 | 16464 | 16621 | 18920 |
| | Mean | 17438 | 13916 | 14406 | 16464 | 16699 | 18084 |
| Shrinkage ratio | MD | 10 | 20 | 6 | 7 | 9 | 7 |
| (%) at 105°C for 8 h | TD | 8 | 16 | 5 | 6 | 7 | 6 |
| Maximum shrinkage ratio (%) | TD | 12 | 4 | 17 | 20 | 21 | 25 |
| Film melting point (°C) | | 134.6 | 136.7 | 133.3 | 134.0 | 135.4 | 134.6 |
| Shutdown temperature (TSD, °C) | | 132.6 | 129.0 | 127.5 | 129.7 | 133.0 | 133.0 |
| Film melting point - TSD | | 2.00 | 7.70 | 5.80 | 4.30 | 2.40 | 1.60 |
| Nailing test | | A | A | A | A | A | A |
| Foreign matter resistance test | | A | A | A | A | A | A |

**Table 3**

| Items | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Comp. Ex. 12 |
|---|---|---|---|---|---|---|---|---|---|---|---|---|---|
| 1st PE | PE (1) | 100 | 100 | 70 | 70 | 60 | | | | | | | 25 |
| | PE (2) | | | | | | | 100 | 100 | 80 | 80 | 70 | 50 |
| | PE (3) | | | | | | | | | | | | |
| | PE (4) | | | | | | | | | | | | |
| | PE (5) | | | | | | 100 | | | | | | |
| 2nd PE | PE (6) | | | 30 | 10 | 20 | | | | 20 | 20 | 30 | 25 |
| 3rd PE | PE (7) | | | | 20 | 20 | | | | | | | |
| Resin conc. (%) | | 30 | 30 | 30 | 25 | 25 | 30 | 30 | 30 | 30 | 30 | 30 | 30 |
| Draw ratio | MD | 9 | 5 | 5 | 5 | 5 | 5 | 9 | 7 | 7 | 5 | 5 | 5 |
| | TD | 9 | 5 | 5 | 5 | 5 | 5 | 9 | 7 | 7 | 5 | 5 | 5 |
| Film thickness (µm) | | 20 | 20 | 20 | 20 | 20 | 20 | 20 | 20 | 20 | 20 | 20 | 20 |
| Porosity (% | | 41 | 44 | 42 | 37 | 30 | 32 | 46 | 48 | 50 | 41 | 47 | 43 |
| Air permeation resistance (sec/100 cc/20 µm) | | 265 | 210 | 355 | 400 | 995 | 3850 | 280 | 255 | 260 | 257 | 330 | 249 |
| Anti-piercing strength (N at 20 µm) | | 7.5 | 3.9 | 4.4 | 4.4 | 4.5 | 2.1 | 7.7 | 5.5 | 6.4 | 5.6 | 4.5 | 5.7 |
| Tensile strength (MPa) | MD | 192 | 107 | 152 | 113 | 118 | 44 | 172 | 150 | 152 | 135 | 105 | 135 |
| | TD | 195 | 118 | 172 | 118 | 118 | 54 | 173 | 152 | 157 | 140 | 104 | 141 |
| Tensile elongation (%) | MD | 65 | 150 | 150 | 110 | 120 | 110 | 80 | 95 | 100 | 170 | 160 | 150 |
| | TD | 55 | 135 | 130 | 120 | 120 | 100 | 70 | 80 | 100 | 169 | 160 | 139 |
| Strength (MPa) × Elongation (%) | MD | 12487 | 16023 | 22785 | 12397 | 14112 | 4851 | 13720 | 14244 | 15190 | 22950 | 16777 | 20250 |
| | TD | 10726 | 15823 | 22295 | 14112 | 14112 | 5390 | 12142 | 12152 | 15680 | 23660 | 16621 | 19599 |
| | Mean | 11606 | 15923 | 22540 | 13255 | 14112 | 5121 | 12931 | 13198 | 15435 | 23305 | 16699 | 19925 |
| Shrinkage ratio (%) at 105°C for 8 h | MD | 13 | 7 | 4 | 4 | 3 | 6 | 16 | 12 | 12 | 11 | 6 | 11 |
| | TD | 12 | 6 | 4 | 3 | 3 | 7 | 13 | 10 | 12 | 10 | 6 | 10 |
| Maximum shrinkage ratio (%) | TD | 6 | 21 | 30 | 7 | 8 | 6 | 4 | 12 | 14 | 22 | 22 | 29 |
| Film melting point (°C) | | 137.7 | 136.6 | 134.7 | 132.5 | 131.2 | 127.0 | 136.9 | 136.2 | 136.0 | 135.2 | 134.8 | 135.3 |
| Shutdown temperature (TSD, °C) | | 139.6 | 136.9 | 136.4 | 134.4 | 131.5 | 123.0 | 134.8 | 134.7 | 134.7 | 134 | 134.0 | 135.5 |
| Film melting point - TSD | | -1.90 | -0.30 | -1.70 | -1.90 | -0.30 | 4.00 | 2.10 | 1.50 | 1.30 | 1.20 | 0.80 | -0.20 |
| Nailing test | | C | C | C | B | A | A | B | B | B | B | B | C |
| Foreign matter resistance test | | C | A | A | B | A | C | B | B | A | A | A | A |

**Table 4**

| | Items | | Example 7 | Comparative Example 13 |
|---|---|---|---|---|
| 1 st solution | 1st PE | PE (1) | | 54.5 |
| | | PE (2) | | |
| | | PE (3) | | |
| | | PE (4) | 100 | |
| | | PE (5) | | |
| | 2nd PE | PE (6) | | 18 |
| | 3rd PE | PE (7) | | 27.5 |
| | Resin conc. (%) | | 30 | 27.5 |
| 2nd solution | 1st PE | PE (1) | 60 | 70 |
| | | PE (2) | | |
| | | PE (3) | | |
| | | PE (4) | | |
| | | PE (5) | | |
| | 2nd PE | PE (6) | 40 | 30 |
| | 3rd PE | PE (7) | | |
| | Resin conc. (%) | | 25 | 23 |
| Layer thickness ratio | | | 1/4/1 | 1/1/1 |
| Draw ratio | | MD | 5 | 5 |
| | | TD | 5 | 5 |
| Film thickness (µm) | | | 25 | 20 |
| Porosity (%) | | | 45 | 40 |
| Air permeation resistance (sec/100 cc/20 µm) | | | 350 | 440 |
| Anti-piercing strength (N at 20 µm) | | | 4.0 | 4.2 |
| Tensile strength (MPa) | | MD | 103 | 108 |
| | | TD | 102 | 104 |
| Tensile elongation (%) | | MD | 141 | 150 |
| | | TD | 143 | 134 |
| Strength (MPa) × Elongation (%) | | MD | 14523 | 16200 |
| | | TD | 14586 | 13936 |
| | | Mean | 14555 | 15068 |
| Shrinkage ratio (%) at 105°C for 8 h | | MD | 8 | 6 |
| | | TD | 7 | 5 |
| Maximum shrinkage ratio (%) | | TD | 17 | 11 |
| Film melting point (°C) | | | 134.0 | 131.0 |
| Shutdown temperature (TSD, °C) | | | 127.5 | 130.6 |
| Film melting point - TSD | | | 6.50 | 0.40 |
| Nailing test | | | A | A |
| Foreign matter resistance test | | | A | A |

## Claims

1. A porous polyolefin film having at least one layer, the porous polyolefin film having a shutdown temperature (TSD) of 133°C or lower, a porosity of 41% or more, and a value of 12,500 or more, which is calculated by (tensile elongation (%) in the machine direction (MD) × tensile strength (MPa) in the machine direction (MD) + tensile elongation (%) in the transverse direction (TD) × tensile strength (MPa) in the transverse direction (TD))/2, the TSD (°C) and Tm satisfying the following formula (1): $Tm - TSD \geq 0$ Formula (1), where Tm represents the lowest among the melting point(s) (°C) of all the layer(s).

2. The porous polyolefin film according to claim 1, wherein both MMD and MTD are not less than 80 MPa, where MMD represents the tensile strength in the MD and MTD represents the tensile strength in the TD.

3. The porous polyolefin film according to claim 1 or 2, wherein the value calculated by (tensile elongation (%) in the MD × tensile strength (MPa) in the MD + tensile elongation (%) in the TD × tensile strength (MPa) in the TD)/2 is from 13,700 to 30,000.

4. The porous polyolefin film according to any one of claims 1 to 3, wherein the TSD is 131°C or lower.

5. The porous polyolefin film according to any one of claims 1 to 4, wherein the melting point of the porous film is 133°C or higher.

6. The porous polyolefin film according to any one of claims 1 to 5, whose anti-piercing strength is not less than 4.0 N/20 µm.

7. The porous polyolefin film according to any one of claims 1 to 6, wherein the polyolefin contains polyethylene.

8. The porous polyolefin film according to any one of claims 1 to 7, wherein the polyolefin contains ethylene-1-hexene copolymer as a main component.

9. A separator for batteries, in which the porous polyolefin film according to any one of claims 1 to 8 is used.

10. A secondary battery, in which the separator for batteries according to claim 9 is used.

11. A method of producing the porous polyolefin film according to any one of claims 1 to 8, the method comprising the steps of: preparing a solution that is composed of 10 to 40% by mass of raw materials, including polyolefin as a main component, and 60 to 90% by mass of a solvent; extruding the solution from a die to produce an unstretched gel composition under cooling for solidification; stretching the gel composition at a temperature from the crystalline dispersion temperature of the polyolefin to the melting point + 10°C; removing a plasticizer from the resulting stretched film and drying the film; and then subjecting the resulting stretched material to heat treatment/re-drawing, wherein the polyolefin contains a high-density polyethylene polymer containing α-olefin, and wherein the high-density polyethylene polymer containing α-olefin has a melting point of 130 to 135°C and a molecular weight of not more than 350,000.

12. The porous polyolefin film production method according to claim 11, wherein the high-density polyethylene polymer containing α-olefin is an ethylene-1-hexene copolymer.
